(19) **Europäisches Patentamt European Patent Office Office européen des brevets**

(11) **EP 4 744 475 A1**

(12) **EUROPEAN PATENT APPLICATION**

(43) Date of publication:
20.05.2026 Bulletin 2026/21

(51) International Patent Classification (IPC):
**A01F 15/07** (2006.01)  **B65H 55/04** (2006.01)

(21) Application number: 25212911.9

(22) Date of filing: 03.11.2025

(52) Cooperative Patent Classification (CPC):
**A01F 15/071; B65H 55/04;** A01F 2015/0745

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 14.11.2024 IT 202400025746

(71) Applicant: **Novatex Italia S.p.A**
**23848 Oggiono (LC) (IT)**

(72) Inventors:
• **Casati, Marco**
**23848 Oggiono LC (IT)**
• **Bonacina, Alessandro**
**23848 Oggiono LC (IT)**
• **Castagna, Domenico**
**23848 Oggiono LC (IT)**

(74) Representative: **Perani & Partners S.p.A.**
**Corso Europa, 15**
**20122 Milano (IT)**

(54) **SPOOL FOR ROUND BALERS AND METHOD FOR WINDING A NET FOR ROUND BALERS**

(57) A spool 1 for round balers, comprising a support core (2) and a net (3) for round balers, which is wound on the core (2) defining a plurality of spool windings, and is unwindable from the core (2) to be wound on a bale (100) of material defining a plurality of bale windings. The net (3) comprises a plurality of first chains (4), each defined by at least a first thread, and a plurality of wefts (5), each defined by at least a second thread arranged between two first chains (4). The first chains (4) of each spool winding are spaced apart from the first chains (4) of at least one preceding and/or subsequent winding along an axial direction (A-A) by a distance such that, when the net (3) is wound on the bale (100), the first chains (4) of each bale winding are spaced apart from the first chains (4) of at least one preceding and/or subsequent bale winding along a direction substantially parallel to a bale longitudinal axis (Z-Z). In detail, when the net is wound on the bale (100), the first chains (4) extend on the bale (100) at least along the bale axial direction by at least a predetermined pitch, such that the distance between the first chains (4) of two subsequent bale windings has a value comprised between 1/4 and 3/4 of the predetermined pitch.

Fig. 5

## Description

*Technical Field*

The present invention relates to a spool for round balers and to a method for winding a net for round balers. The net finds useful application in machines for round balers, for collecting and compressing agricultural products such as forage and straw.

*Description of the prior art*

Nets for round balers are known in the state of the art. A net of a known type comprises a plurality of first chains, parallel to each other and oriented in the winding direction of the net. The net also comprises second chains, or wefts, connected to the first chains.

Nets of a known type are provided in spools, wound on a respective support core by means of a net winding process. An example of a winding process is shown in document EP 1369516.

The winding process known in the state of the art, also known as zetting, provides for a bidirectional movement, in which the core of the spool is rotatedalong a winding direction of the net and, at the same time, is translated by a reciprocating motion at a constant speed along a translation direction transverse to the winding direction. In this way, the first chains of the net are arranged sequentially along the spool, reducing their overlap.

However, the traditional zetting process does not allow for achieving satisfactory results. In fact, the known spools, on which the nets are wound by means of traditional zetting, sometimes generate on the bale a problem of surface non-uniformity due to the concentration of the pressure exerted by the first chains on the bale of material due to the overlap of the first chains of the preceding winding with the first chains of the subsequent winding.

In greater detail, the traditional zetting process allows for poor control of the position of the chains of the net on the core of the spool, which, depending on the diameter of the spool, can be more or less overlapped one on top of the other, causing a final surface non-uniformity on the bales of material wound from the same spool.

Such non-uniformity has repercussions on the material ensiled with the said net. In fact, the arrangement of the chains of the net on the core of the known spools causes, once the net is unwound from the core and wound around a bale of material, a localized thickening of the material collected in the bale, i.e. a surface non-uniformity, following the overlap of the first chains. In correspondence with this thickening, air pockets are formed, which are deleterious to the quality of the material itself.

*Summary of the invention*

In this context, the technical task underlying the present invention is to propose a spool for round balers and a method for winding a net for round balers that overcome the drawbacks of the prior art cited above.

In particular, it is a scope of the present invention to provide a spool for round balers that comprises a net wound on a support core in such a way that, when the net is unwound from the core and wound on a bale of material, the net is arranged optimally on the bale.

A further scope of the present invention is to provide a method for winding a net for round balers on a support core that allows for greater control of the arrangement of the net on the support core and, consequently, a greater uniformity of arrangement of the net on a bale of material when it is unwound from the core and wound on the bale.

The specified technical task and the specified scopes are achieved by a spool for round balers and by a method for winding a net for round balers comprising the technical features set forth in one or more of the appended claims.

*Advantages of the invention*

The spool for round balers described hereinafter has the advantage of having a more uniform arrangement of a net for round balers on a support core, so that, when the net is wound on a bale of material, it is arranged with the same uniformity also on the bale, thus preserving the quality of the ensiled material. In particular, the first chains of the net are arranged on the core, spaced apart from the first chains of the preceding and/or subsequent windings by an optimal distance capable of preventing the overlap of the same first chains once the net is wound on the bale.

The winding method of the present invention allows for effectively controlling the winding parameters in order to optimize the arrangement of the net for round balers on the core of the spool. In particular, the winding method comprises a bidirectional movement of the core of the spool. In particular, the present method provides for controlling the translation speed so that it is variable with respect to the winding speed along the winding direction, so as to define the position of the first chains along the translation direction. In this way, it is advantageously possible to arrange the first chains of the net on the bale of material in a precise and repeatable manner during the unwinding and consequent winding of the net on the bale according to a predetermined geometry.

In more detail, the result of the winding method according to the present invention is to create an effect, for those viewing the bale of material, such that the bale appears wound by the net in a substantially analogous manner with respect to a bale wound by a traditional net, wherein however the traditional net requires a net length equal to three times that necessary for a spool according to the present description. In greater detail, the present invention allows for obtaining a zetting profile with a transverse movement of the net equal to a transverse distance that is repeated for a predetermined pitch, corresponding to about 130% of the perimeter of the bale. In this way, with a winding of the net equal to 3 turns on the bale of material, an effect of spacing the first chains by about 1/3 of the width of the bale of material is achieved.

This therefore allows for obtaining greater control of the arrangement of the net in the spool, such that, when the net is unwound from the core and wound on the bale, the outer surface of the net is substantially devoid of any convexity and/or concavity, which would otherwise generate air pockets in the ensiled products.

It should be noted that the spacing of the first chains between a preceding and a subsequent winding could lead, in the case of large transverse distances, to surface nonuniformities of the spool according to the present invention. To prevent the formation of this surface defect, an embodiment of the present invention provides for translating the net by a first and a second translation distance in an alternating manner.

In any case, it is good to note that the spool for round balers according to the present invention is recognizable with respect to known spools by the repeatability of the arrangement of the first chains of the net during its winding.

BRIEF DESCRIPTION OF THE DRAWINGS

Further features and advantages of the present invention will become more apparent from the indicative, and therefore non-limiting, description of a preferred but not exclusive embodiment of a spool for round balers, illustrated in the accompanying drawings, wherein:

- Figure 1 shows a perspective view of a spool for round balers, in which a net for round balers is partially wound on a support core;
- Figure 2 shows a schematic top view of a segment of the net of Figure 1;
- Figure 3a shows a schematic side view of a spool for round balers according to the present invention;
- Figure 3b shows a schematic side view of a spool for round balers having a surface non-uniformity;
- Figure 4a schematically shows a detail of a net of a spool for round balers according to a first embodiment of the present invention;
- Figure 4b schematically shows a detail of a net of a spool for round balers according to a second embodiment of the present invention;

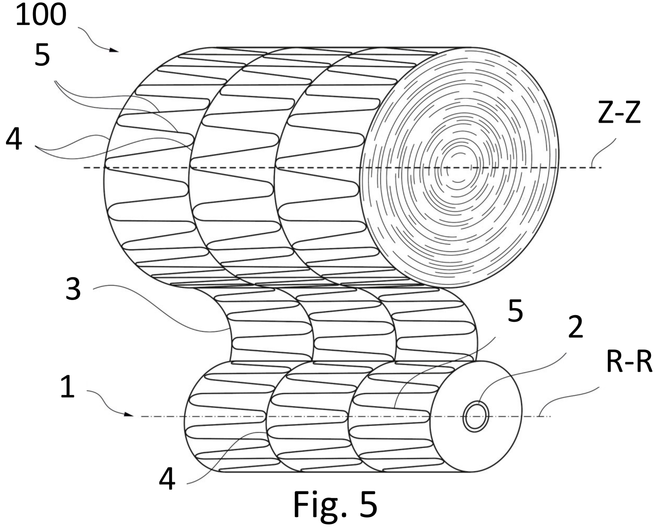

- Figure 5 shows a spool for round balers according to the present invention partially unwound and wound on a bale of material.

DETAILED DESCRIPTION

With reference to the attached figures, reference number 1 indicates a spool for round balers in accordance with the present invention.

The spool 1 comprises a support core 2 having a rotation axis R-R. The core 2 preferably has a tubular shape, extending along an axial direction A-A, substantially parallel to the rotation axis R-R, and having the rotation axis R-R as its axis of symmetry.

Preferably, the core 2 is made of recyclable material, more preferably paper or cardboard.

The spool 1 also comprises a net 3 for round balers wound on the core 2 and defining a plurality of spool windings, each coaxial with the core 2. The net 3 is unwindable from the core 2 to be wound on a bale 100 of material, for example forage or straw, having its own longitudinal axis Z-Z, defining a plurality of bale windings, each coaxial with the bale 100.

Preferably, the plurality of bale windings comprises from 2 to 5 windings, more preferably between 2.5 and 4.5 windings, of which between 2 and 4 are complete windings.

It should be noted that, for descriptive needs, in the following when reference is made to the net 3 wound on the bale 100, a reference system defined with respect to the bale 100 will be used, and in particular a respective bale axial direction, substantially parallel to the bale longitudinal axis Z-Z, and a bale radial direction, orthogonal to the bale longitudinal axis Z-Z.

In accordance with the invention, the net 3 comprises a plurality of first chains 4 and of second chains, or wefts 5.

Each first chain 4 comprises at least a first thread developing along a longitudinal direction X-X, while each weft 5 comprises at least a second thread arranged between two first chains 4. In more detail, each weft 5 is configured to connect two adjacent first chains 4.

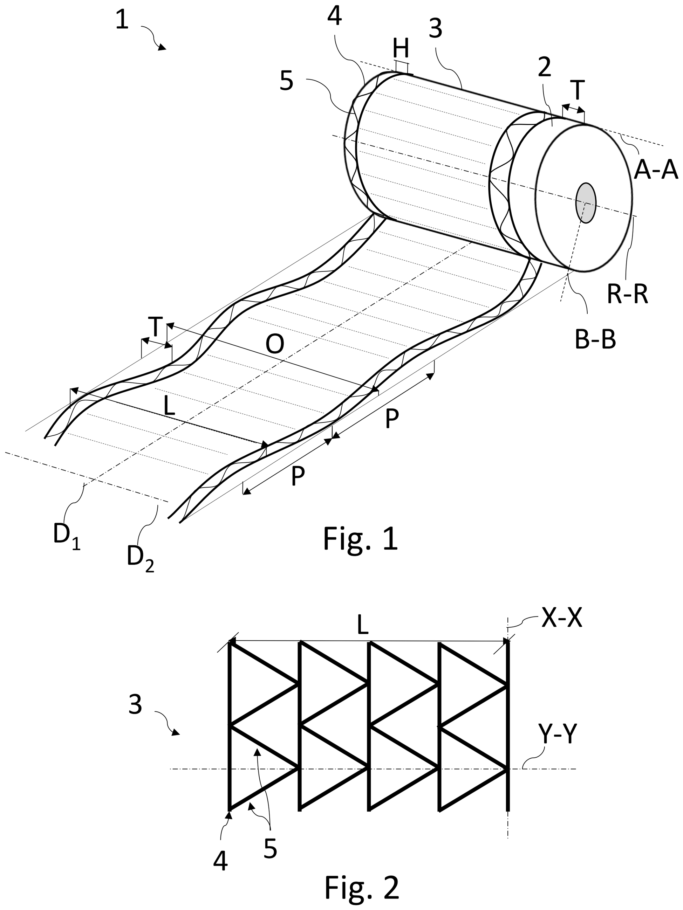

According to an aspect of the invention, each weft 5 is defined by a plurality of segments which each connect two adjacent first chains 4, which develop in an alternating manner along a respective direction inclined with respect to the longitudinal direction X-X, as shown for example in Figure 2. In more detail, each segment of weft 5 extends between two ends, each of which is connected to a respective first chain 4 by means of knitting.

Preferably, the first chains 4 are defined by a single first thread. Always preferably, the wefts 5 are in turn defined by a single second thread. Alternatively, the first chains 4 can be defined by two or more first threads. Similarly, the wefts 5 can be defined by two or more second threads. Optionally, the first threads and the second threads are equal.

According to the preferred embodiment of the invention, each first and second thread is made of a mixture of high-density polyethylene (HDPE), polypropylene (PP), additives and stabilizers. Preferably, the high-density polyethylene is polyethylene for textile applications. Always preferably, the quantity of additives and stabilizers is chosen according to the geographical area where the net 3 will be used.

It should be noted that the mixture for the first and second threads is made in such a way as to obtain a degree of tenacity and resistance to UV rays of the threads so that the net 3 for round balers is able to maintain the compactness of the forage preferably for at least one year.

According to an embodiment, the net 3 has a length comprised between 1,000 and 5,000 meters, preferably between 2,000 and 4,500 meters, depending on the specific requirements.

According to an aspect, shown for example in Figure 1, the net 3 preferably extends for a net width L along a transverse direction Y-Y, perpendicular to the longitudinal direction X-X. Preferably, the net width L is comprised between 100 and 200 centimeters, more preferably between 120 and 170 cm.

According to the same aspect, the core 2 extends along the axial direction A-A at least for a nominal core width O, greater than the net width L by a predetermined transverse distance T.

The net 3 is preferably wound on the core 2 and surrounds the core 2 along the entire nominal core width O by means of two or more subsequent spool windings. In other words, the core 2 is covered by the net 3 for a width equal to the nominal core width O.

Optionally, the core 2 can have an overall width along the axial direction A-A greater than the nominal core width O.

In accordance with the invention, the first chains 4 of each spool winding are spaced apart from the first chains 4 of at least one preceding and/or subsequent winding along the axial direction A-A by a distance such that, when the net 3 is wound on a bale 100 of material, the first chains 4 of each bale winding are spaced apart from the first chains 4 of at least one preceding and/or subsequent bale winding along the bale axial direction.

It is worth noting that the arrangement of the first chains 4 described above allows to avoid their overlap both on the core 2 and on the bale 100 of material, in such a way that, when the net 3 is wound on the bale 100, there is no formation of localized thickenings that give rise to air pockets, which are deleterious to the quality of the ensiled material. The spool of the present invention therefore has the advantageous effect of preserving the quality of the material for a more prolonged time.

According to the preferred embodiment, the net 3 comprises a first spool winding closer to the core 2 and a second spool winding further away from the core 2, the first spool winding being spaced apart from the second spool winding along a radial direction B-B, transverse, and preferably perpendicular, to the axial direction A-A, the distance between the first and the second winding being substantially constant over the entire nominal core width O along the axial direction A-A.

In other words, the second spool winding has a uniform outer surface, having a constant tubular shape.

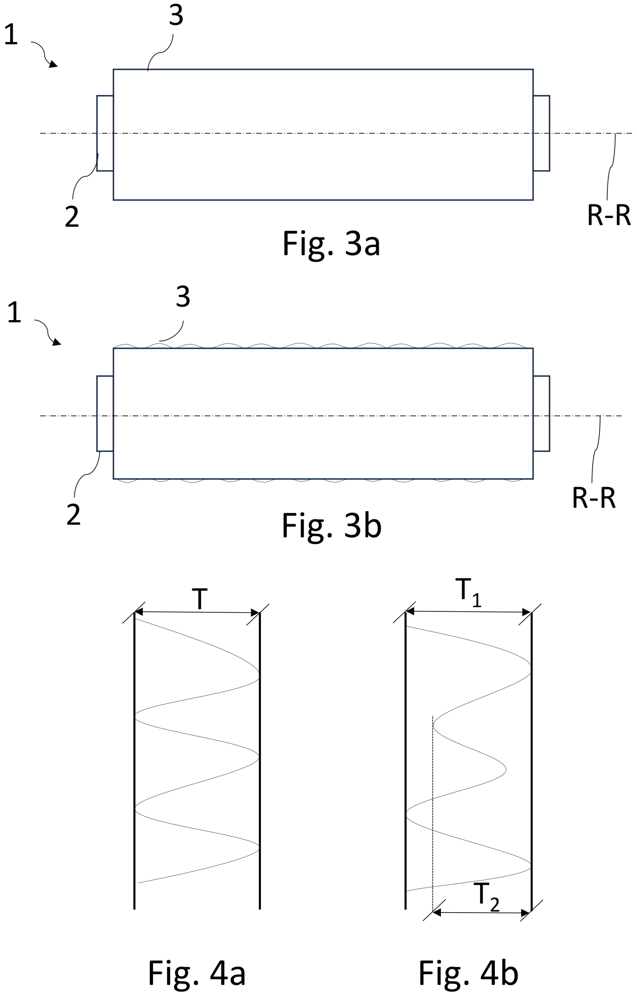

Always according to the preferred embodiment, the spool 1 therefore comprises a substantially constant transversal profile, devoid of any convexity and/or concavity, as shown in Figure 3a.

It is worth noting that, contrary to the state of the art, as shown in Figure 3b, the absence of convexity or concavity materializes, once the net 3 is wound on the bale 100, in the absence of air pockets between the net 3 and the ensiled material.

In more detail, therefore, when the net 3 is wound on a bale 100 of material, the net 3 surrounds the bale along the bale axial direction over a determined width by means of one or more bale windings. The number of necessary bale windings varies with the diameter of the bale of material. The distance along a bale radial direction between a first bale winding closer to the bale 100 and a second bale winding further away from the bale 100 is substantially constant along the bale axial direction over the entire width of the bale of material wound by the net 3.

Please note that, in the preferred embodiment, the entire width of the bale 100 along the axial direction is wounded by the net.

It is worth noting that such an arrangement of the net 3 is obtainable thanks to the distance between the first chains 4 of the spool windings on the core 2, which is defined as a function of specific process parameters used during the winding of the net 3 on the core 2, as better detailed below.

According to the preferred embodiment of the invention, the net 3 is wound on the core 2 through a winding method which comprises a step of rotating the core 2 around the rotation axis R-R along a winding direction $D_1$ with a winding speed, and a simultaneous step of translating with a reciprocating motion the core 2 along a translation direction $D_2$, transverse to the winding direction $D_1$, with a translation speed. Note that the translation direction $D_2$ is substantially coincident with the axial direction A-A.

According to the invention, the winding method therefore comprises a bidirectional movement of the core 2 to wind the net 3 thereon, wherein the translation speed of the core 2 is variable as a function of the winding speed. This allows for optimizing the control of the distance of the first chains 4 between the various spool windings, making the arrangement of the net 3 on the bale 100 of material predictable and controllable.

According to the preferred embodiment, the translation speed and the winding speed are related by a linear-type relationship. In more detail, the two speeds are related by the relationship:

$$V_T = kV_R$$

wherein $V_T$ is the translation speed, $V_R$ is the winding speed, k is a constant defined as a function of a translation distance, preferably equal to the transverse distance T, travelled by the core 2 along the translation direction $D_2$

and of a respective length of net wound by rotating the core 2 around the rotation axis R-R during the translation of the core 2 for said translation distance.

In greater detail, the constant k is defined in such a way as to obtain a displacement of the core 2 along the translation direction $D_2$ equal to the transverse distance T for every P meters of length of net wound along the winding direction $D_1$. In this way, the net 3 is arranged on the core 2 in an inclined manner with respect to the winding direction $D_1$. That is to say, the longitudinal direction X-X of the first chains 4 wound on the core 2 is transverse to the winding direction $D_1$. This thus allows for covering the entire nominal core width O by means of two or more subsequent spool windings.

It is worth noting that the constant k allows for taking into consideration the diameter of the core 2 and the diameter of the bale 100 of material. In this way, it is possible to adapt the arrangement of the net 3 on the core 2 to the specific requirements.

According to an aspect of the invention, when the net is wound on the bale 100, the first chains 4 of the net extend, i.e. are arranged, on the bale 100, as well as along the winding direction, along the bale axial direction for at least one predetermined pitch, and preferably for multiples of said pitch.

In this way, the distance between the first chains 4 of two subsequent bale windings has a value comprised between 1/4 and 3/4 of the predetermined pitch, and preferably equal to 1/3 of the predetermined pitch.

In the preferred embodiment, said predetermined pitch is equivalent to the length of net wound along the winding direction when the core 2 makes a displacement along the translation direction $D_2$ equal to the transverse distance T.

Always according to the preferred embodiment, the pitch corresponds substantially to 130% of a perimeter of the bale 100.

By way of example, in the preferred embodiment, to perform a translation of the core 2 equal to the transverse distance T in one direction, the core 2 winds a length of net comprised between 5 and 10 meters, preferably equal to 7 meters. In other words, the predetermined pitch corresponds to a length of net preferably equal to 7 meters. In this way, with about three windings of net on the bale 100, the first chains 4 are spaced from each other by a distance equal to 1/3 of the pitch.

In accordance with an embodiment, the net 3 is wound on the core 2 through a variant of the method cited above. In fact, for a further increase in the uniformity of arrangement of the net 3 on the core 2, and therefore on the bale, the winding method provides for cyclically moving the core 2 along the translation direction $D_2$ by a first translation distance $T_1$, equal to the transverse distance T, for a first number of cycles, and by a second translation distance $T_2$, less than the first translation distance $T_1$, for a second number of cycles. The first and second number of cycles are preferably equal to one. Alternatively, the first and second number of cycles can be greater than one and modifiable according to the requirements.

Note that the difference in translation of the core 2, and therefore of arrangement of a first chain 4 on the core 2, between the two methods discussed above is shown schematically in Figures 4a and 4b.

Advantageously, this allows for compensating for the undulatory trend assumed by the first chains 4 on the core 2, avoiding any overlaps due to said trend.

A further object of the present invention is a method for winding a net 3 for round balers on a support core 2 of a spool 1, in accordance with the present description.

The method comprises the step of coupling the core 2 to an end portion of the net 3, in such a way as to allow the winding of the same on the core 2, preferably a mechanical-type coupling.

The method therefore provides for rotating the core 2 around the rotation axis R-R to move it along the winding direction $D_1$ with a winding speed to wind the net 3 on the core 2.

Simultaneously with the rotation of the core 2, the method comprises the step of translating with a reciprocating motion the core 2 along a translation direction $D_2$ transverse to the winding direction $D_1$, i.e. moving the core 2 cyclically along the translation direction $D_2$ in a first sense and a second sense opposite to the first sense, with a translation speed.

Note that the translation speed is variable as a function of the winding speed, preferably according to a linear-type relationship, more preferably according to the relationship $V_T = kV_R$ discussed above.

In this way, the method allows for arranging the first chains 4 of the net 3 on the core 2 in such a way that they are spaced apart between adjacent spool windings by a determined distance, such that, when the net 3 is arranged on the bale 100 of material, the first chains 4 are spaced apart from the first chains 4 of preceding and/or subsequent bale windings.

According to an embodiment, the step of translating the core 2 comprises the cyclical repetition of the sub-step of translating the core 2 along the translation direction $D_2$ in the first and in the second sense of a first translation distance $T_1$ for a first number of cycles, and translating the core 2 along the translation direction $D_2$ in the first and in the second sense of a second translation distance $T_2$ for a second number of cycles.

According to this embodiment, the second translation distance $T_2$ is less than the first translation distance $T_1$.

Preferably, the first number of cycles and the second number of cycles are equal to 1. Alternatively, the first and second number of cycles can be greater than one, depending on the requirements.

It is worth noting in fact that the combination of the first and second number of cycles can be defined, for example, according to the diameter of the core 2 to obtain an optimal arrangement of the first chains 4 of the net 3, taking into account the undulatory trend assumed by the same.

## Claims

1. A spool (1) for round balers, comprising:

   - a support core (2) having a rotation axis (R-R);
   - a net (3) for round balers wound on the core (2) and defining a plurality of spool windings, the net (3) being unwindable from the core (2) in order to be wound on a bale (100) of material defining a plurality of bale windings, the net (3) comprising:

     - a plurality of first chains (4), each being defined by at least a first thread developing along a longitudinal direction (X-X),
     - a plurality of wefts (5), each being defined by at least a second thread arranged between two first chains (4),

   wherein the first chains (4) of each spool windings are spaced apart from the first chains (4) of at least one preceding and/or subsequent winding along an axial direction (A-A) substantially parallel to the rotation axis (R-R) of the core (2), the distance between the first chains (4) of each spool winding being such that, when the net (3) is wound on the bale (100), the first chains (4) of each bale winding are spaced apart from the first chains (4) of at least one preceding and/or subsequent bale winding along a bale axial direction substantially parallel to a bale longitudinal axis (Z-Z) **characterized in that**, when the net is wound on the bale (100), the first chains (4) extend on the bale (100) at least along the bale axial direction by at least a predetermined pitch, such that the distance between the first chains (4) of two subsequent bale windings has a value comprised between 1/4 and 3/4 of the predetermined pitch.

2. The spool (1) for round balers according to claim 1, wherein, when the net is wound on the bale (100), the distance between the first chains (4) of two subsequent bale windings has a value of 1/3 of the predetermined pitch.

3. The spool (1) for round balers according to claim 1 or 2, wherein the net (3) has a net width (L) along a transverse direction (Y-Y) perpendicular to the longitudinal direction (X-X), the core (2) having a nominal core width (O) along the axial direction (A-A) greater than the net width (L) by a predetermined transverse distance (T), the net (3) surrounding the core (2) along the entire nominal core width (O) by means of two or more subsequent spool windings.

4. The spool (1) for round balers according to claim 3, wherein the net (3) comprises a first spool winding closer to the core (2) and a second spool winding further away from the core (2), the first spool winding being spaced apart from the second spool winding along a radial direction (B-B) transverse to the axial direction (A-A), the distance between the first and the second winding being substantially constant along the axial direction (A-A) over the entire nominal core width (O).

5. The spool (1) for round balers according to claim 4, wherein the net (3), when wound on a bale (100), surrounds the bale (100) along the bale axial direction over a determined width by means of one or more bale windings, the distance along a bale radial direction between a first bale winding closer to the bale (100) and a second bale winding further away from the bale (10) being substantially constant along the bale axial direction over said determined width.

6. The spool (1) for round balers according to any one of claims 1 to 5, comprising a transversal profile which is substantially constant and devoid of any convexity and/or concavity.

7. The spool (1) for round balers according to any one of claims 1 to 6, wherein the net (3) is wound on the core (2) through a winding method comprising a step of rotating the core (2) around the rotation axis (R-R) along a winding direction ($D_1$) with a winding speed, and a simultaneous step of translating the core (2) by a reciprocating motion along a translation direction ($D_2$) transverse to the winding direction ($D_1$) with a translation speed, wherein the translation speed varies as a function of the winding speed.

8. The spool (1) for round balers according to claim 7, wherein the translation speed and the winding speed are related by a linear-type relationship.

9. The spool (1) for round balers according to claim 8, wherein the translation speed and the winding speed are related by the following relationship:

$$V_T = kV_R$$

wherein $V_T$ is the translation speed, $V_R$ is the winding speed, k is a constant defined according to a length of a net wound by rotating the core (2) and to a translation distance travelled by the core (2) along the translation direction ($D_2$) during the rotation of the core (2) over said net length.

10. A method for winding a net (3) for round balers on a support core (2) of a spool (1), wherein the net (3)

**EP 4 744 475 A1**

comprises a plurality of first chains (4), each being defined by at least a first thread developing along a longitudinal direction (X-X), and a plurality of wefts (5), each being defined by at least a second thread arranged between two first chains (4), the method comprising the steps of:

- coupling the core (2) to an end portion of the net (3);
- rotating the core (2) around a rotation axis (R-R) in order to move it along a winding direction ($D_1$) with a winding speed to wind the net (3) on the core (2);
- during the rotation of the core (2), translating the core (2) by a reciprocating motion along a translation direction ($D_2$) transverse to the winding direction ($D_1$) in a first sense and a second sense opposed to the first sense, and with a translation speed;

**characterized in that** the translation speed varies as a function of the winding speed, **characterized in that** the step of translating comprises repeating the following sub-steps:

- translating the core (2) along the translation direction ($D_2$) in the first and in the second sense of a first translation distance ($T_1$) for a first number of cycles;
- translating the core (2) along the translation direction ($D_2$) in the first and in the second sense of a second translation distance ($T_2$) for a second number of cycles,

wherein the second translation distance ($T_2$) is less than the first translation distance ($T_1$).

1

5

4

H

3

2

T

A-A

R-R

B-B

T

O

L

P

P

D₁

D₂

Fig. 1

L

X-X

3

Y-Y

4

5

Fig. 2

Fig. 3a

Fig. 3b

Fig. 4a

Fig. 4b

Fig. 5

**EUROPEAN SEARCH REPORT**

Application Number

EP 25 21 2911

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2020/027005 A1 (OKAMOTO LACE CO LTD [JP]) 6 February 2020 (2020-02-06) * paragraphs [0010] - [0080] * * figures 1,2 * | 1-10 | INV. A01F15/07 B65H55/04 |
| A,D | EP 1 369 516 A1 (TAMA PLASTIC IND [IL]) 10 December 2003 (2003-12-10) * paragraphs [0002] - [0028] * * figures 1,3a,3b * | 1-10 | |
| A | JP 2022 149438 A (OKAMOTO LACE KK) 6 October 2022 (2022-10-06) * pages 2-9 * * figures 1,2 * | 1-10 | |
| A | WO 2020/162265 A1 (MATSUYAMA KEORI CO LTD [JP]) 13 August 2020 (2020-08-13) * paragraph [19*98] * * figure 1 * | 1-10 | |
| A | US 4 781 291 A (VANGINHOVEN ROBERT M [US]) 1 November 1988 (1988-11-01) * columns 1-4 * * figure 2 * | 1-10 | TECHNICAL FIELDS SEARCHED (IPC) A01F B65H |

The present search report has been drawn up for all claims

| Place of search | Date of completion of the search | Examiner |
|---|---|---|
| Munich | 27 January 2026 | Bongibault, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## EP 4 744 475 A1

## ANNEX TO THE EUROPEAN SEARCH REPORT
## ON EUROPEAN PATENT APPLICATION NO.

EP 25 21 2911

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2026

| Patent document cited in search report | | Publication date | Patent family member(s) | | Publication date |
|---|---|---|---|---|---|
| WO 2020027005 | A1 | 06-02-2020 | EP | 3831995 A1 | 09-06-2021 |
| | | | WO | 2020027005 A1 | 06-02-2020 |
| EP 1369516 | A1 | 10-12-2003 | AR | 013992 A1 | 31-01-2001 |
| | | | AT | E248243 T1 | 15-09-2003 |
| | | | AT | E442470 T1 | 15-09-2009 |
| | | | AT | E477360 T1 | 15-08-2010 |
| | | | AU | 743282 B2 | 24-01-2002 |
| | | | BR | 9804478 A | 18-09-2001 |
| | | | CA | 2251235 A1 | 25-05-1999 |
| | | | CR | 5914 A | 28-07-1999 |
| | | | CY | 1110876 T1 | 10-06-2015 |
| | | | DE | 29825132 U1 | 24-03-2005 |
| | | | DE | 69817510 T2 | 17-06-2004 |
| | | | DK | 0919655 T3 | 24-11-2003 |
| | | | DK | 1371768 T3 | 20-09-2010 |
| | | | EP | 0919655 A2 | 02-06-1999 |
| | | | EP | 1369516 A1 | 10-12-2003 |
| | | | EP | 1371768 A1 | 17-12-2003 |
| | | | ES | 2202761 T3 | 01-04-2004 |
| | | | ES | 2333209 T3 | 18-02-2010 |
| | | | ES | 2350632 T3 | 25-01-2011 |
| | | | JP | 3861230 B2 | 20-12-2006 |
| | | | JP | H11315453 A | 16-11-1999 |
| | | | NO | 323044 B1 | 27-12-2006 |
| | | | NZ | 332595 A | 28-07-2000 |
| | | | PT | 919655 E | 31-12-2003 |
| | | | PT | 1369516 E | 28-09-2009 |
| | | | PT | 1371768 E | 25-08-2010 |
| | | | US | 6521551 B1 | 18-02-2003 |
| | | | US | 2001004572 A1 | 21-06-2001 |
| | | | UY | 25241 A1 | 14-05-1999 |
| | | | ZA | 9810074 B | 31-05-1999 |
| JP 2022149438 | A | 06-10-2022 | JP | 7224677 B2 | 20-02-2023 |
| | | | JP | 2022149438 A | 06-10-2022 |
| WO 2020162265 | A1 | 13-08-2020 | JP | 6775805 B2 | 28-10-2020 |
| | | | JP | 2020128600 A | 27-08-2020 |
| | | | TW | 202035235 A | 01-10-2020 |
| | | | WO | 2020162265 A1 | 13-08-2020 |
| US 4781291 | A | 01-11-1988 | AU | 2140188 A | 02-03-1989 |
| | | | CA | 1316021 C | 13-04-1993 |
| | | | DE | 3875036 T2 | 18-02-1993 |
| | | | EP | 0304977 A1 | 01-03-1989 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 21 2911

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2026

| Patent document cited in search report | Publication date | Patent family member(s) | Publication date |
|---|---|---|---|
| | | US 4781291 A | 01-11-1988 |

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1369516 A